# EUROPEAN PATENT SPECIFICATION

(11) **EP 3 678 244 B1**
(45) Date of publication and mention of the grant of the patent: **27.09.2023**
(21) Application number: 19213042.5
(22) Date of filing: 03.12.2019
(51) Int. Cl.: H01M 8/04089, H01M 8/0612, H01M 8/249, H01M 8/04014, H01M 8/124, H01M 8/12

(54) **SYSTEMS AND METHODS FOR INCREASING SOLID OXIDE FUEL CELL EFFICIENCY**
SYSTEME UND VERFAHREN ZUR ERHÖHUNG DER EFFIZIENZ EINER FESTOXIDBRENNSTOFFZELLE
SYSTÈMES ET PROCÉDÉS D'AUGMENTATION DE L'EFFICACITÉ DE PILES À COMBUSTIBLE D'OXYDE SOLIDE

(30) Priority: 02.01.2019 US 201916237787
(43) Date of publication of application: 08.07.2020
(73) Proprietor: The Boeing Company, Arlington, VA 22202 (US)
(72) Inventor: MATA, Marianne E., Chicago, IL 60606-1596 (US); BALAN, Chellappa, Chicago, IL 60606-1596 (US); STOIA, Tina, Chicago, IL 60606-1596 (US); ATREYA, Shailesh, Chicago, IL 60606-1596 (US)
(74) Representative: Duxbury, Stephen

(56) References cited:
- WO-A2-2015/169940
- US-A- 5 413 878
- US-A1- 2001 036 566
- US-A1- 2012 088 169

## Description

### FIELD

The present disclosure relates generally to fuel cell systems, and more particularly, to staging solid oxide fuel cell (SOFC) stacks in series to increase efficiency of a SOFC system.

### BACKGROUND

Electromechanical fuel cells, such as solid oxide fuel cells (SOFCs), operate by creating an electrochemical reaction between incoming fuel and oxidant streams to create electricity. Individually, each single electromechanical fuel cell produces relatively small amounts of electricity. Thus, to produce desired amounts of electricity, individual electromechanical fuel cells are typically placed in series to create a fuel cell "stack." Fuel cell stacks can be utilized in a variety of contexts, such as on an aircraft or other vehicle.

SOFC technology operates at high temperatures, such as between 549 °C (1020 °F) to 1038 °C (1900 °F), and the oxidant and fuel flows need to be heated to operating temperature before introduction into the SOFC stack. Traditionally, not all of the usable fuel and oxygen/air in the incoming streams can be electrochemically reacted in a single pass through a SOFC stack. In order for a SOFC system to derive additional energy, use of the unspent fuel with the unspent oxygen/air is usually combusted to produce useful heat or each stream can be separately recirculated back into the stack. Combustion of unspent fuel with the unspent oxygen is less efficient than electrochemical reacting the fuel.

Existing SOFC systems with fuel and/or air recirculation typically include a large SOFC stack and one or more recycle blowers or similar devices that operate to recirculate the fuel exhaust into the SOFC stack. However, the recirculation and recycle blower(s) in the existing SOFC systems typically operate at medium or high temperatures and do not perform as desired. Thus, the existing SOFC systems also typically include heat exchangers that cool down the incoming streams to lower temperatures, after which the incoming streams are passed through the recycle blower(s), and then heated back up to SOFC operating temperatures. However, this adds complexity and weight to existing SOFC systems, which can be undesirable on aircrafts or other scenarios where weight is a primary consideration.

What is needed is an efficient, reliable SOFC system that is lighter and less complex.

The abstract of U.S. Patent Application Publication No. US 2012/0088169 A1 states: 'A fuel cell system, which includes n fuel cell modules and a control device for controlling the power generation amount of each of the fuel cell modules. An m-th fuel cell module of the fuel cell system includes an m-th exhaust gas discharge channel for discharging an exhaust gas from the m-th fuel cell module, and an m-th exhaust gas supply channel branched from the m-th exhaust gas discharge channel, for supplying the exhaust gas from the m-th fuel cell module to an (m+1)-th fuel cell module for warming up the (m+1)-th fuel cell module.'

The abstract of U.S. Patent Application Publication No. US 2001/0036566 A1 states: 'An arrangement is proposed for a system with at least two molten carbonate or solid oxide fuel cell stacks (1, 2, 3). The cathode flows (14) of these stacks are connected in series while the anode flows (25) are in parallel. All stacks have an internal reforming device for a hydrocarbon fuel. Anode gas is recycled (24) from the stack outlets to the inlets. The invention allows the stacks to be of the same design and this reduces manufacturing costs. The cathode streams between the stacks are cooled by, for example, adding streams of cool air (15) to them. The cathode inlet temperatures can, therefore, be controlled by relatively inexpensive low temperature air valves. The invention allows the system to be designed with few heat exchangers, if any. The per pass utilization of all the oxidant streams and fuel streams are low. The efficiency of the system is typically 4-5 percentage points higher than that of equivalent conventional systems.'

The abstract of International Patent Application Publication No. WO 2015/169940 A2 states: ' A core unit in the shape of an integrated module for fuel cell based power generation consists of (1) an inlet or more inlets for fuel cell suitable fuels, said fuels comprising hydrogen, hydrocarbon-based fuels, steam reformed fuels (such as hydrocarbons, alcohols and ethers) and ammonia, (2) one or more inlets for air, (3) one or more off-gas outlets, (4) heat exchangers, and (5) a fuel cell assembly, all mounted in an insulated housing or in several separate insulated housings connected by relevant piping. The unit is an SOFC sub-system, preferably in the 1.5 kW (DC) power range, designed to provide a simple interface to natural gas based SOFC technology. The system features tight integration of the SOFC stack(s) or stack module(s) and all hot balance of plant components. Since the system is designed for anode off-gas recycling, the unit requires no external water supply once in operation. Anode gas recycling results in high overall fuel utilization and in high electrical efficiency.' .

The abstract of U.S. Patent No. 5,413,878 states: ' An improved electrochemically active system and method including a plurality of electrochemical devices, such as fuel cells and fluid separation devices, in which the anode and cathode process-fluid flow chambers are connected in fluid-flow arrangements so that the operating parameters of each of said plurality of electrochemical devices which are dependent upon process-fluid parameters may be individually controlled to provide improved operating efficiency. The improvements in operation include improved power efficiency and improved fuel utilization in fuel cell power generating systems and reduced power consumption in fluid separation devices and the like through interstage process fluid parameter control for series networked electrochemical devices. The improved networking method includes recycling of various process flows to enhance the overall control scheme.'

### SUMMARY

In an example, a system for increasing SOFC efficiency is described. The system comprises a series of SOFC stacks, a fuel flow path through the series of SOFC stacks, and an air flow path through the series of SOFC stacks. Between two sequential SOFC stacks in the series of SOFC stacks: in the fuel flow path, fuel exhaust that is output from a first SOFC stack of the two sequential SOFC stacks is input into a second SOFC stack of the two sequential SOFC stacks, in the air flow path, air exhaust that is output from the first SOFC stack is input into the second SOFC stack, and the fuel flow path comprises a fuel inlet positioned for injecting fuel into the fuel flow path between the two sequential SOFC stacks, and/or the air flow path comprises an air inlet positioned for injecting air into the air flow path between the two sequential SOFC stacks..

In another example, a method for operating a series of SOFC stacks is described. The series of SOFC stacks includes a fuel flow path through the series of SOFC stacks and an air flow path through the series of SOFC stacks. The method comprises, between two sequential SOFC stacks in the series of SOFC stacks: in the fuel flow path, delivering fuel exhaust that is output from a first SOFC stack of the two sequential SOFC stacks into a second SOFC stack of the two sequential SOFC stacks, in the air flow path, delivering air exhaust that is output from the first SOFC stack is input into the second SOFC stack, and injecting fuel into the fuel flow path between the two sequential SOFC stacks, and/or and injecting air into the air flow path between the two sequential SOFC stacks.

The features, functions, and advantages that have been discussed can be achieved independently in various examples or may be combined in yet other examples. Further details of the examples can be seen with reference to the following description and drawings.

### BRIEF DESCRIPTION OF THE FIGURES

The novel features believed characteristic of the illustrative examples are set forth in the appended claims. The illustrative examples, however, as well as a preferred mode of use, further objectives and descriptions thereof, will best be understood by reference to the following detailed description of an illustrative example of the present disclosure when read in conjunction with the accompanying drawings, wherein:
Figure 1 shows an example of a system including a series of SOFC stacks, as well as a fuel inlet positioned between two sequential SOFC stacks of the series of SOFC stacks, according to the present disclosure.
Figure 2 shows an air inlet positioned between the two sequential SOFC stacks of Figure 1, according to the present disclosure.
Figure 3 shows a fuel inlet and an air inlet positioned between the two sequential SOFC stacks of Figure 1, according to the present disclosure.
Figure 4 shows a fuel inlet, an air inlet, and a fuel reformer positioned between the two sequential SOFC stacks of Figure 1, according to the present disclosure.
Figure 5 shows a fuel inlet, an air inlet, a fuel reformer, a fuel mixer, and an air mixer positioned between the two sequential SOFC stacks, according to the present disclosure.
Figure 6 shows an initial SOFC stack of the series of SOFC stacks of Figure 1, as well as an initial fuel reformer and a heat exchanger positioned before the initial SOFC stack, according to the present disclosure.
Figure 7 shows various components positioned between SOFC stacks of the series of SOFC stacks of Figure 1, according to the present disclosure.
Figure 8 shows a flowchart of an example method of operating a series of SOFC stacks, according to the present disclosure.
Figure 9 shows a flowchart of an example method for use with the method of Figure 8, according to the present disclosure.
Figure 10 shows a flowchart of another example method for use with the method of Figure 8, according to the present disclosure.
Figure 11 shows a flowchart of another example method for use with the method of Figure 8, according to the present disclosure.
Figure 12 shows a flowchart of another example method for use with the method of Figure 11, according to the present disclosure.
Figure 13 shows a flowchart of another example method for use with the method of Figure 8, according to the present disclosure.
Figure 14 shows a flowchart of another example method of operating a series of SOFC stacks, according to the present disclosure.

### DETAILED DESCRIPTION

Disclosed examples will now be described more fully hereinafter with reference to the accompanying drawings, in which some, but not all of the disclosed examples are shown. Indeed, several different examples may be described and should not be construed as limited to the examples set forth herein. Rather, these examples are described so that this disclosure will be thorough and complete and will fully convey the scope of the disclosure to those skilled in the art.

By the terms "substantially," "about," and "proximate" used herein, it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Unless otherwise specifically noted, elements depicted in the drawings are not necessarily drawn to scale.

Within examples, methods and systems relating to SOFC systems are described. In particular, the disclosed SOFC systems can increase reliability and efficiency while reducing weight and complexity from existing SOFC systems. Rather than recirculating fuel exhaust from a single larger SOFC stack back into the same SOFC stack using a recycle blower as in existing SOFC systems, the disclosed SOFC systems involve sequencing multiple smaller SOFC stacks in series, where each SOFC stack - with the exception of the initial SOFC stack in the series - is configured to intake an output of a preceding SOFC stack. In addition, at one or more locations along the series, fuel is added to the fuel exhaust from a given SOFC stack for a subsequent SOFC stack to react and/or air is added to cool the previous reacted air that is output from the preceding SOFC stack. As such, the disclosed SOFC systems can reduce weight and complexity by eliminating the need for recycle blowers, as well as in other ways.

Although example systems are described herein primarily with respect to SOFC stacks, it should be understood that other types of fuel cell stacks could be used as an alternative to SOFC stacks. Examples of such stacks include phosphoric acid fuel cell stacks, solid acid fuel cell stacks, or molten carbonate fuel cell stacks, among other possibilities.

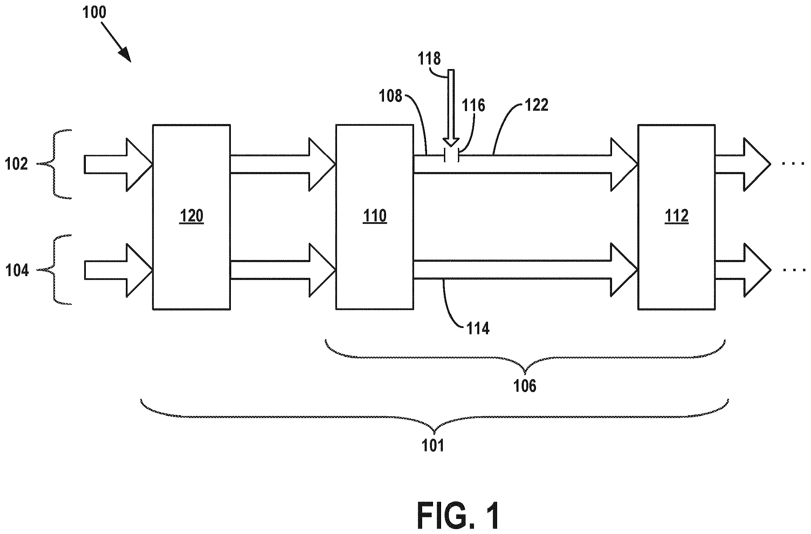

Referring now to the figures, Figure 1 is an example of a system 100 for increasing SOFC efficiency. The system 100 includes a series of SOFC stacks 101, a fuel flow path 102 through the series of SOFC stacks 101, and an air flow path 104 through the series of SOFC stacks 101. In the fuel flow path 102 between two sequential SOFC stacks 106 in the series of SOFC stacks 101, fuel exhaust 108 that is output from a first SOFC stack 110 of the two sequential SOFC stacks 106 is input into a second SOFC stack 112 of the two sequential SOFC stacks 106. In the air flow path 104 between the two sequential SOFC stacks 106, air exhaust 114 that is output from the first SOFC stack 110 is input into the second SOFC stack 112. Further, the fuel flow path 102 between the two sequential SOFC stacks 106 also includes a fuel inlet 116 positioned for injecting fuel 118 into the fuel flow path 102 between the two sequential SOFC stacks 106.

As shown, the series of SOFC stacks 101 includes three SOFC stacks, namely, the first SOFC stack 110, the second SOFC stack 112, and an initial SOFC stack 120 that is arranged sequentially first in the series of SOFC stacks 101. In alternative examples, the series of SOFC stacks 101 could include more or less SOFC stacks. For instance, in some cases, a series of SOFC stacks including six, seven, or eight SOFC stacks can result in an even higher SOFC system efficiency than a series of SOFC stacks with less than six SOFC stacks. The optimal number of SOFC stacks can vary.

Each SOFC stack of the series of SOFC stacks 101 - namely, each of the first SOFC stack 110, the second SOFC stack 112, and the initial SOFC stack 120 - includes a plurality of connected SOFCs assembled in series or in another manner. Further, each SOFC of the SOFC stack includes an anode, a cathode, and an electrolyte, and each SOFC is configured to produce electricity through an electrochemical reaction in which fuel is oxidized. For example, incoming fuel comprising hydrogen is input on an anode side of the SOFC, and incoming air comprising one or more oxidants (e.g., oxygen, or another oxidizing agent) is input on a cathode side of the SOFC. The electrolyte (i.e., a solid oxide electrolyte) conducts negative oxygen ions from the cathode to the anode. On the anode side, the oxygen ions are then electrochemically oxidized with hydrogen from the incoming fuel, which thus produces electricity, waste heat, and steam. Because each SOFC individually might produce a relatively small amount of electricity, SOFCs are typically arranged in a stack.

The fuel flow path 102 includes a physical pathway (e.g., tubes, inlets, outlets, and/or other structures), both inside each SOFC stack of the series of SOFC stacks 101 and between SOFC stacks of the series of SOFC stacks 101, through which fuel, fuel exhaust, water, and/or other elements flow.

The air flow path 104 includes a physical pathway, both inside each SOFC stack of the series of SOFC stacks 101 and between SOFC stacks of the series of SOFC stacks 101, through which air, air exhaust, water, and/or other elements flow. In practice, the fuel flow path 102 and the air flow path 104 are distinct paths, and are designed and positioned such that, between any two sequential SOFC stacks (e.g., the two sequential SOFC stacks 106), fuel from the fuel flow path 102 and air from the air flow path 104 do not mix.

The two sequential SOFC stacks 106 are a representative example of two sequential SOFC stacks of the series of SOFC stacks 101. As used herein, the term "two sequential SOFC stacks" refers to any given pair of sequential SOFC stacks in the series of SOFC stacks 101, where one SOFC stack of the given pair of sequential SOFC stacks sequentially precedes another SOFC stack of the given pair of sequential SOFC stacks. Thus, the initial SOFC stack 120 and the first SOFC stack 110 are another example of two sequential SOFC stacks. Furthermore, the components and associated operations that are described herein as being positioned and occurring between two sequential SOFC stacks are not limited to a single pair of SOFC stacks. For example, additionally or alternatively to the fuel inlet 116 being positioned between the first SOFC stack 110 and the second SOFC stack 112, another fuel inlet (not shown) could be positioned between the initial SOFC stack 120 and the first SOFC stack 110.

The fuel exhaust 108 is made up of liquid and gas, including steam, hydrocarbons, and hydrogen. The fuel exhaust 108 can also include carbon monoxide, nitrogen, and/or other elements or compounds.

The air exhaust 114 is made up of liquid and gas, including steam, oxygen, nitrogen, carbon monoxide, and other naturally-occurring elements in the Earth's atmosphere.

The fuel inlet 116 includes a pipe or other structure configured such that the fuel 118 can be injected through the fuel inlet 116 and into the fuel flow path 102.

The fuel 118 is a liquid and/or gaseous fuel including hydrogen and at least one type of hydrocarbon. The fuel 118 is "fresh" fuel - namely, it is a fuel from a different source than the fuel exhaust 108, unaltered by a SOFC, and provides the fuel flow path 102 with additional hydrogen and hydrocarbons. Further, the fuel 118 is introduced into the system 100 to be (i) used directly for electrochemical reaction in the second SOFC stack 112 (i.e., without first reforming the fuel 118) or (ii) reformed to break down the fuel 118 into components that are able to be electrochemically reacted in the second SOFC stack 112.

In operation, the fuel 118 injected by the fuel inlet 116 is subsequently mixed with the fuel exhaust 108 that is output from the first SOFC stack 110 to create a fuel mixture 122 made up of the fuel 118 and the fuel exhaust 108. For example, the fuel exhaust 108 can travel through a tube of the fuel flow path 102 and the fuel 118 can be injected into the tube, thereby causing the liquid and gas of the fuel exhaust 108 to mix with the liquid and gas of the fuel 118 in the tube. The fuel mixture 122 then enters the second SOFC stack 112, where the second SOFC stack 112 can use the fuel mixture 122 to perform an electrochemical reaction. Thus, the fuel mixture 122 is the incoming fuel for the second SOFC stack 112. The fuel mixture 122 includes the fuel exhaust 108 plus the additional hydrogen and hydrocarbons from the fuel 118.

A SOFC stack, such as the first SOFC stack 110, the second SOFC stack 112, and the initial SOFC stack 120, can produce electricity as long as there is sufficient reactant hydrogen or other reactant fuel (i.e. methane, carbon monoxide, etc.) input into the SOFC stack, sufficient reactant oxygen input into the SOFC stack, and a load path for electrical current to travel, and as long as incoming fuel and incoming air into the SOFC stack are each at an appropriate temperature. As used herein, the term "appropriate temperature" refers to a temperature within, or substantially close to the bounds of, an operating temperature range at or within which the SOFC stack is configured to optimally perform the electrochemical reaction. An example operating temperature range can be a range of 650 to 1000 (°C). The appropriate temperature can be dependent on individual SOFC stack design.

The efficiency of a SOFC - and thus, the efficiency of a SOFC stack - generally increases with increased reactant concentrations. Thus, adding the fuel 118 between the two sequential SOFC stacks 106 helps provide more reactants (in this case, more fuel) for the electrochemical reaction that subsequently takes place in the second SOFC stack 112, thereby increasing the efficiency of the second SOFC stack 112 and, in turn, the system 100. In addition, the fuel 118 can be colder than the fuel exhaust 108, and thus, adding the fuel 118 can help reduce the temperature in the fuel flow path 102 to an appropriate temperature for the second SOFC stack 112 to perform the electrochemical reaction.

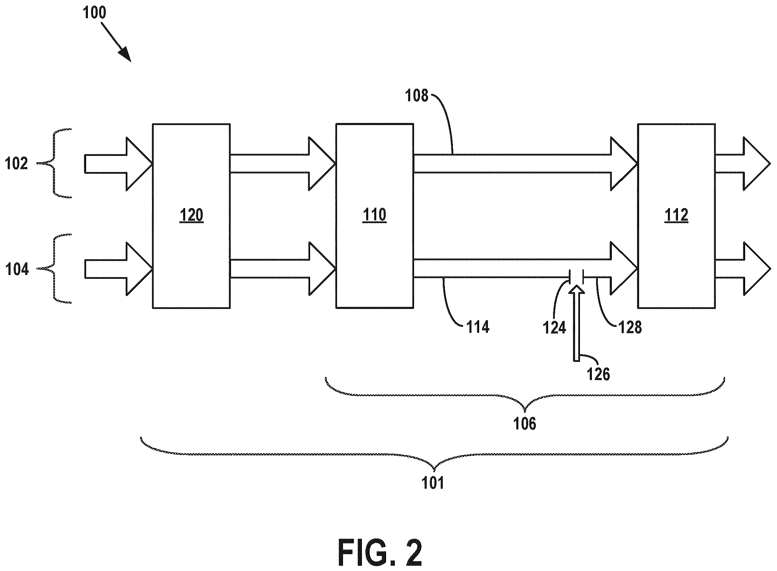

Referring now to Figure 2, an example is shown of the system 100 in which, instead of the fuel flow path 102 between the two sequential SOFC stacks 106 including the fuel inlet 116, the air flow path 104 between the two sequential SOFC stacks 106 includes an air inlet 124 positioned for injecting air 126 into the air flow path 104.

The air inlet 124 includes a pipe or other structure configured such that the air 126 can be injected through the air inlet 124 and into the air flow path 104.

The air 126 includes oxygen, nitrogen, carbon monoxide, and other naturally-occurring elements in the Earth's atmosphere. The air 126 is "fresh" air - namely, it is ambient air, from a different source than the air exhaust 114, that is processed to a desired temperature (e.g., a temperature colder than the air exhaust 114) and/or to other desired conditions for introduction into the system 100.

In operation, the air 126 injected by the air inlet 124 is subsequently mixed with the air exhaust 114 that is output from the first SOFC stack 110 of the two sequential SOFC stacks 106 to create an air mixture 128 made up of the air 126 and the air exhaust 114. The air mixture 128 then enters the second SOFC stack 112, where the second SOFC stack 112 can use the air mixture 128 to perform the electrochemical reaction. Thus, the air mixture 128 is the incoming air for the second SOFC stack 112. The air mixture 128 includes the air exhaust 114 as well as the additional oxygen and other elements from the air 126.

When air is used for an electrochemical reaction in a SOFC stack, some of the usable oxygen is consumed and additional waste heat is added. Because of this, the air exhaust 114 leaving the first SOFC stack 110 will typically have a higher temperature and a lower oxygen percentage than desired. Further, as noted above, the efficiency of a SOFC stack generally increases with increased reactant concentrations. Thus, adding the air 126 between the two sequential SOFC stacks 106 helps provide more reactants (in this case, more oxygen) for the electrochemical reaction that subsequently takes place in the second SOFC stack 112, thereby increasing the efficiency of the second SOFC stack 112 and, in turn, the system 100. In addition, the air 126 can be colder than the air exhaust 114, and thus, adding the air 126 can help reduce the temperature in the air flow path 104 to the appropriate temperature.

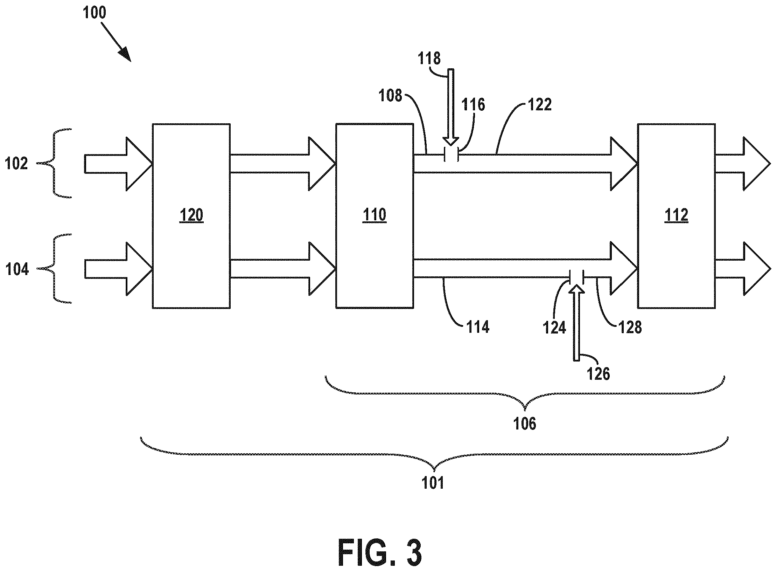

Whether to implement the system 100 using the fuel inlet 116 as shown in Figure 1 or the air inlet 124 as shown in Figure 2 may be application specific, as both may provide efficiencies in operation of the system 100. For instance, in some situations, there can be volume restrictions placed on the system 100. The volume restrictions can be application specific, vehicle specific, or based on some other condition. The system 100 can meet the volume restrictions by including either the fuel inlet 116 of Figure 1 or the air inlet 124 of Figure 2 between the two sequential SOFC stacks 106. Alternatively such as the example shown next in Figure 3, the system 100 can include both the fuel inlet 116 and the air inlet 124 between the two sequential SOFC stacks 106 and still meet the volume restrictions.

Referring now to Figure 3, an example is shown of the system 100 in which, between the two sequential SOFC stacks 106, the fuel flow path 102 includes the fuel inlet 116 and the air flow path 104 includes the air inlet 124.

Adding the fuel 118 to the fuel flow path 102 and adding the air 126 to the air flow path 104 can help provide more reactants - in this case, both more fuel and more oxygen - for the electrochemical reaction that takes place in the second SOFC stack 112, thereby increasing the efficiency of the system 100. In addition, because the fuel 118 can be colder than the fuel exhaust 108 and the air 126 can be colder than the air exhaust 114, adding the fuel 118 and the air 126 can also help reduce the respective temperature in the fuel flow path 102 and the air flow path 104 to the appropriate temperature.

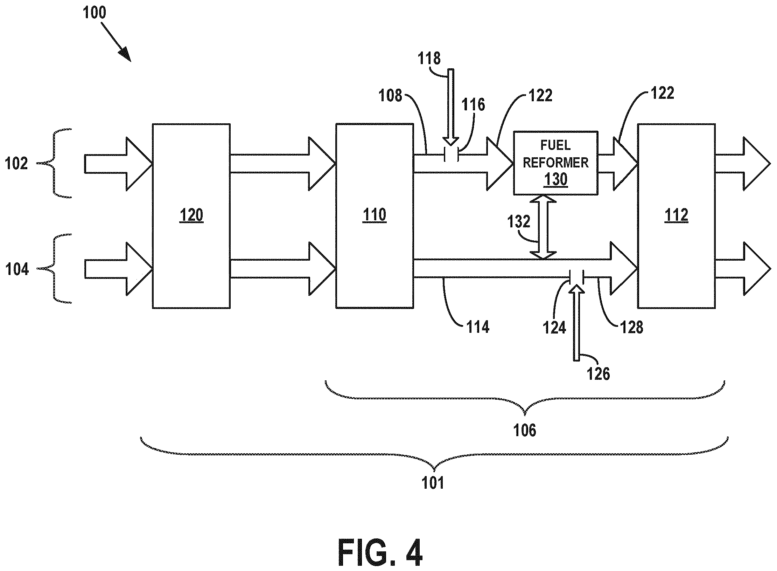

Referring now to Figure 4, an example is shown of the system 100 in which, in addition to the fuel inlet 116 and the air inlet 124 being between the two sequential SOFC stacks 106, the fuel flow path 102 between the two sequential SOFC stacks 106 also includes a fuel reformer 130 that is configured for reforming the fuel mixture 122.

As used herein, the term "reform," or variations thereof, means to intake fuel and break down hydrocarbon chains of that fuel into components that are able to be electrochemically reacted in a SOFC stack. Thus, the fuel reformer 130 is a physical device operable to intake the fuel mixture 122 and break down hydrocarbon chains of the fuel mixture 122 into components (e.g., hydrogen) that are able to be electrochemically reacted in the second SOFC stack 112. The fuel reformer 130, or any other fuel reformer described herein, can take various forms. For example, the fuel reformer 130 can be an endothermic reformer such as a steam reformer that uses an endothermic reformation reaction to reform the fuel mixture 122. The fuel reformer 130 includes an inlet for receiving the fuel mixture 122, a chamber in which the reformation reaction occurs, an outlet through which the fuel mixture 122 exits once reformed, and one or more valves (e.g., for controlling the fuel mixture 122 intake into the inlet and/or controlling the fuel mixture 122 output through the outlet). The fuel reformer 130 can also include other components, such as a heat source (e.g., a burner), a nickel catalyst (or other metal catalyst), other inlets, other outlets, etc., depending on the type of reformer.

The fuel reformer 130 is shown as a distinct component and separate from the first SOFC stack 110 and the second SOFC stack 112. However, alternatively the fuel reformer 130 can be integrated into one of the first SOFC stack 110 or the second SOFC stack 112. For example, the fuel reformer 130 could be integrated with an outlet of the first SOFC stack 110 or integrated with an inlet of the second SOFC stack 112. This can even further reduce weight, volume, and complexity. Whether the fuel reformer 130 is integrated into the first SOFC stack 110 or the second SOFC stack 112 can depend on the type of fuel used in the system 100. For example, because methane can be more easily reformed than other fuels, reformation can occur internally to the first SOFC stack 110, and thus, the fuel reformer 130 can be integrated with the first SOFC stack 110.

The fuel reformer 130 can require heat to sustain a reformation reaction that occurs in the fuel reformer 130 to break down the hydrocarbon chains of the fuel mixture 122. However, in some situations, the fuel mixture 122 might not be hot enough to sustain the reformation reaction. Thus, to provide fuel reformer 130 with heat for the reformation reaction, the fuel flow path 102 and the air flow path 104, though distinct paths, can be co-located and positioned such that heat - namely, heat 132, shown as an arrow in Figure 4 - is extracted from the air exhaust 114 and transferred between the air flow path 104 and the fuel flow path 102 before the air 126 (which is typically colder than the air exhaust 114) is injected into the air flow path 104. For example, the air flow path 104 can be adjacent to the fuel reformer 130 such that the air flow path 104 and the fuel reformer 130 are separated by, but share, a solid wall through which the heat 132 transfers. An arrow representing the heat 132 is shown in Figure 4.

In operation, the fuel 118 injected by the fuel inlet 116 is subsequently mixed with the fuel exhaust 108 that is output from the first SOFC stack 110 to create the fuel mixture 122. The fuel mixture 122 subsequently enters the fuel reformer 130 and the fuel reformer 130 reforms the fuel mixture 122. At substantially the same time, or before the fuel reformer 130 reforms the fuel mixture 122, the heat 132 is provided to the fuel reformer 130 for the reformation reaction. Once reformed, the fuel mixture 122 is input into the second SOFC stack 112.

By placing the fuel reformer 130 downstream in the fuel flow path 102 from both the fuel exhaust 108 and the fuel 118, all of the reactants needed by the fuel reformer 130 for the reformation reaction are supplied. Further, by reforming the fuel mixture 122, the fuel reformer 130 can help even further increase the amount of reactants for the electrochemical reaction that takes place in the second SOFC stack 112, thereby increasing the efficiency of the second SOFC stack 112 and, in turn, the system 100.

In examples where fuel reformer 130 is a steam reformer, the fuel reformer 130 requires heat and input steam to sustain the endothermic reformation reaction. The heat 132 can be provided as discussed above to meet heat requirements for the fuel reformer 130, and the fuel exhaust 108 - which includes steam as a byproduct of the electrochemical reaction in the first SOFC stack 110, as noted above - can be advantageously used to meet requirements for the input steam. Thus, use of a steam reformer can increase efficiency of the system 100, allowing steam from the fuel exhaust 108 of the first SOFC stack 110 to be used in the steam reformer before the second SOFC stack 112. In alternative examples, other types of fuel reformers could be used.

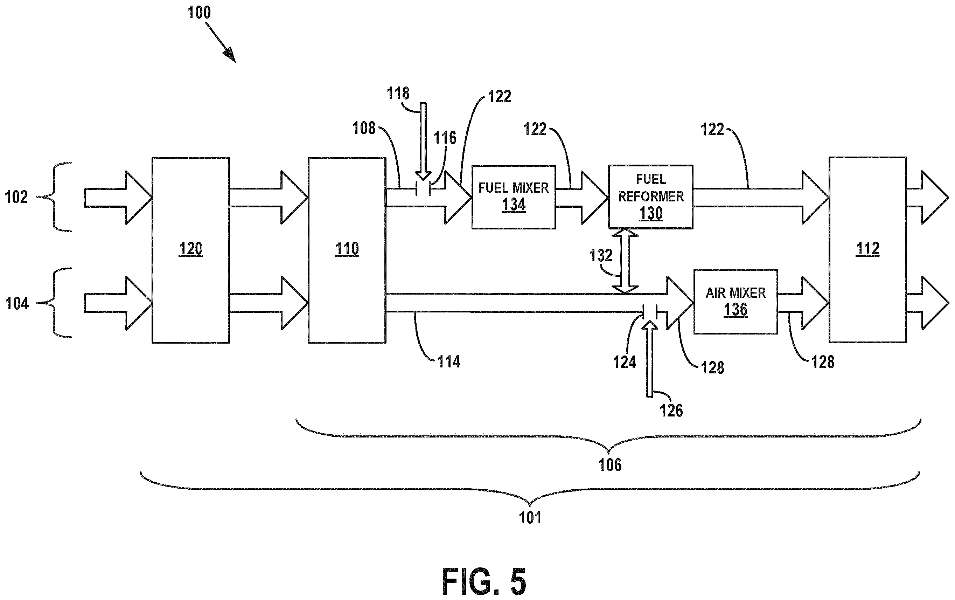

Referring now to Figure 5, an example is shown of the system 100 in which, in addition to the fuel inlet 116, the air inlet 124, and the fuel reformer 130 being between the two sequential SOFC stacks 106, the fuel flow path 102 between the two sequential SOFC stacks 106 also includes a fuel mixer 134 configured to mix the fuel mixture 122 for the fuel reformer 130 to reform. Additionally, the air flow path 104 between the two sequential SOFC stacks 106 also includes an air mixer 136 configured to mix the air mixture 128 for input into the second SOFC stack 112.

The fuel mixer 134 is a structure, such as a tube or multiple interconnected tubes, having one or more inlets, one or more outlets, and a chamber (e.g., an area with a diameter larger than that of other portions of the fuel flow path 102) in which the fuel mixture 122 is mixed. To facilitate mixing of the fuel mixture 122, the fuel mixer 134 can move (e.g., rotate) or can include a separate apparatus (e.g., a rotating appendage) that mixes the fuel mixture 122. Additionally or alternatively, mixing of the fuel mixture 122 can occur naturally as the fuel mixture 122 flows through the fuel mixer 134, without movement of the fuel mixer 134 itself or of another device. The fuel mixer 134 can be a separate component from the fuel inlet 116 (as shown in Figure 5, for instance) or can include the fuel inlet 116.

The air mixer 136 is a structure, such as a tube or multiple interconnected tubes, having one or more inlets, one or more outlets, and a chamber (e.g., an area with a diameter larger than that of other portions of the air flow path 104) in which the air mixture 128 is mixed. To facilitate mixing of the air mixture 128, the air mixer 136 can move (e.g., rotate) or can include a separate apparatus (e.g., a fan) that mixes the air mixture 128. Additionally or alternatively, mixing of the air mixture 128 can occur naturally as the air mixture 128 flows through the air mixer 136, without movement of the air mixer 136 itself or of another device. The air mixer 136 can be a separate component from the air inlet 124 (as shown in Figure 5, for instance) or can include the air inlet 124.

In operation, the fuel mixer 134 mixes the fuel mixture 122 as discussed above, and the fuel mixture 122 subsequently enters the fuel reformer 130 to be reformed. As used herein, the phrase "mixing the fuel mixture," or variations thereof, can refer to different acts, depending on whether the fuel mixer 134 is a separate component from the fuel inlet 116. For example, where the fuel mixer 134 is a separate component from the fuel inlet 116, such as shown in Figure 5, the fuel 118 and the fuel exhaust 108 can already be mixed to a certain degree by the time the fuel 118 and the fuel exhaust 108 enter the fuel mixer 134, due to distance travelled by the fuel 118 and the fuel exhaust 108 along the fuel flow path 102 between the fuel inlet 116 and the fuel mixer 134. In this case, the act of mixing the fuel mixture 122 involves helping further mix the fuel mixture 122 that enters the fuel mixer 134. Alternatively, where the fuel mixer 134 includes the fuel inlet 116, the act of mixing the fuel mixture 122 may involve separately intaking the fuel 118 and the fuel exhaust 108 and creating the fuel mixture 122.

In either case, the fuel mixer 134 can help uniformly mix the fuel 118 and the fuel exhaust 108. As used herein, the phrase "uniformly mix," or variations thereof, refers to a type of mixing of multiple substances where the substances retain their individual chemical makeup and every part of the resulting mixture has the same properties (e.g., the resulting mixture has a uniform temperature and a uniform composition) or substantially the same properties. Thus, the fuel mixer 134 can help uniformly mix the fuel 118 and the fuel exhaust 108 to an acceptably uniform temperature, namely, to the appropriate temperature, while maintaining the increased amount of reactants from the fuel 118 that help increase the efficiency of the system 100.

In addition, the fuel mixer 134 can help reduce the distance along the fuel flow path 102 needed to achieve the appropriate temperature and the desired reactant concentration for the fuel mixture 122 before the fuel mixture 122 is input into the second SOFC stack 112, thereby helping minimize weight and volume while increasing the temperature and reactant concentration in the fuel flow path 102. Alternatively where the fuel mixer 134 includes the fuel inlet 116 can even further reduce the distance along the fuel flow path 102 needed to achieve the appropriate temperature and the desired reactant concentration for the fuel mixture 122. Further, , the fuel mixer 134 can be included between the two sequential SOFC stacks 106 even if the fuel reformer 130 is not present, so as to achieve uniform mixing of the fuel mixture 122 while meeting volume restrictions.

Additionally, in operation, the air mixer 136 mixes the air mixture 128 as discussed above, and the air mixture 128 subsequently enters the second SOFC stack 112. As used herein, the phrase "mixing the air mixture," or variations thereof, can refer to different acts, depending on whether the air mixer 136 is a separate component from the air inlet 124. For example, where the air mixer 136 is a separate component from the air inlet 124, such as shown in Figure 5, the air 126 and the air exhaust 114 can already be mixed to a certain degree by the time the air 126 and the air exhaust 114 enter the air mixer 136, due to distance travelled by the air 126 and the air exhaust 114 along the air flow path 104 between the air inlet 124 and the air mixer 136. In this case, the act of mixing the air mixture 128 involves helping further mix the air mixture 128 that enters the air mixer 136. Alternatively, where the air mixer 136 includes the air inlet 124, the act of mixing the air mixture 128 can involve separately intaking the air 126 and the air exhaust 114 and creating the air mixture 128.

In either case, the air mixer 136 can help uniformly mix the air 126 and the air exhaust 114, thereby reducing a temperature of the air exhaust 114 to an acceptably uniform temperature, namely, to the appropriate temperature, while maintaining the increased amount of reactants from the air 126 that help increase the efficiency of the system 100.

In addition, the air mixer 136 can help reduce the distance along the air flow path 104 needed to achieve the appropriate temperature and the desired reactant concentration for the air mixture 128 before the air mixture 128 is input into the second SOFC stack 112, thereby helping minimize weight and volume while increasing the temperature and reactant concentration in the air flow path 104. Examples where the air mixer 136 includes the air inlet 124 can even further reduce the distance along the air flow path 104 needed to achieve the appropriate temperature and the desired reactant concentration for the air mixture 128.

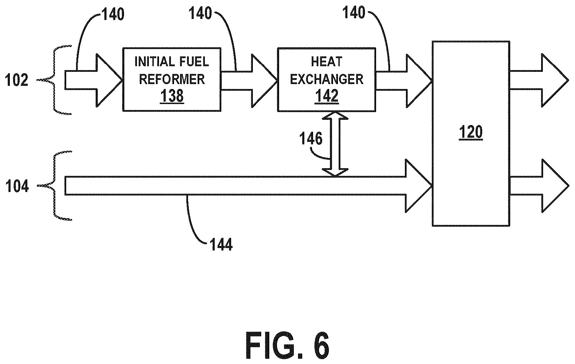

Referring now to Figure 6, an example is shown of the system 100 in which the fuel flow path 102 includes an initial fuel reformer 138 configured for receiving an initial fuel input 140, reforming the initial fuel input 140, and providing, into the initial SOFC stack 120, the initial fuel input 140. In addition, the fuel flow path 102 includes a heat exchanger 142 positioned between the initial fuel reformer 138 and the initial SOFC stack 120, and the air flow path 104 includes an initial air input 144 entering the initial SOFC stack 120.

The initial fuel reformer 138 a physical device operable to intake the initial fuel input 140 and break down hydrocarbon chains of the initial fuel input 140 into components (e.g., hydrogen) that are able to be electrochemically reacted in the initial SOFC stack 120. The initial fuel reformer 138 can take various forms, such as a CPOX reformer that uses an exothermic reaction to reform the initial fuel input 140. Alternatively, the initial fuel reformer 138 can be a steam reformer or another type of fuel reformer.

The initial fuel input 140 is a liquid and/or gaseous fuel including hydrogen and at least one type of hydrocarbon. Similar to the fuel 118 described above, the initial fuel input 140 can be a fresh fuel that has been unaltered by a SOFC and that is introduced into the system 100 to be (i) used directly for electrochemical reaction in the initial SOFC stack 120 (i.e., without first reforming the initial fuel input 140) or, as in the example shown in Figure 6, (ii) reformed by the initial fuel reformer 138 to break down the initial fuel input 140 into components that are able to be electrochemically reacted in the initial SOFC stack 120. In either case, the electrochemical reaction that takes place in the initial SOFC stack 120 effectively initiates operation of the system 100.

The heat exchanger 142 is a device configured to reduce a temperature of the initial fuel input 140 after the initial fuel input 140 has been reformed by the initial fuel reformer 138 and to transfer heat 146 from the fuel flow path 102 to the air flow path 104. The heat exchanger 142 can include a tube or series of tubes through which the initial fuel input 140 travels, where the tube(s) is/are separated from the air flow path 104 by a solid wall through which the heat 146 can be transferred from the initial fuel input 140 to the air flow path 104.

The initial air input 144 is air that includes an oxidant (e.g., oxygen, or another oxidizing agent) that ultimately helps oxidize the initial fuel input 140 during the electrochemical reaction that takes place in the initial SOFC stack 120 when the electrochemical reaction takes place.

In operation, the initial fuel reformer 138 receives the initial fuel input 140 and reforms the initial fuel input 140. The initial fuel input 140, now reformed, subsequently enters and passes through the heat exchanger 142 before entering the initial SOFC stack 120.

In some situations, the initial fuel input 140 that exits the initial fuel reformer 138 can be higher than an appropriate temperature for the initial SOFC stack 120 to perform an electrochemical reaction, and the initial air input 144 can be lower than the appropriate temperature. The heat exchanger 142 is useful in these situations because the heat exchanger 142 can transfer the heat 146 from the fuel flow path 102 to the air flow path 104, thereby helping regulate temperatures of the fuel flow path 102 and the air flow path 104 by reducing the temperature of the initial fuel input 140 before the initial fuel input 140 enters the initial SOFC stack 120 and raising the temperature of the initial air input 144 before the initial air input 144 enters the initial SOFC stack 120. Further, to minimize weight and volume, the heat exchanger 142 can be kept smaller than alternative types of heat exchangers.

In other situations, however, the initial fuel input 140 that exits the initial fuel reformer 138 can be close enough to the appropriate temperature (e.g., within 10 to 50 °C), in which case the heat exchanger 142 can be removed to reduce weight and volume of the system 100. In examples where the initial fuel reformer 138 is a CPOX reformer, for instance, the initial fuel reformer 138 uses an exothermic reaction to reform the initial fuel input 140, and thus, the initial fuel input 140 that exits the initial fuel reformer 138 can be close enough to the appropriate temperature.

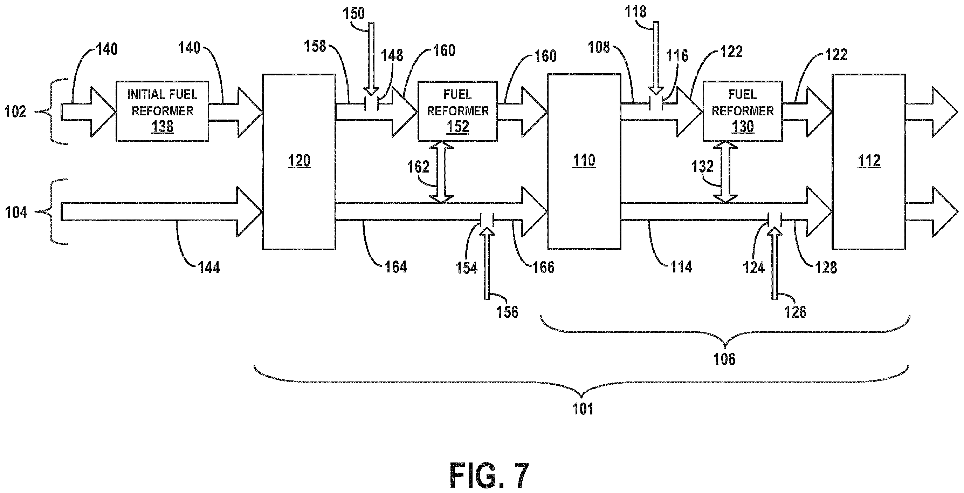

Referring now to Figure 7, an example is shown of the system 100 in which, between two sequential SOFC stacks of each pair of sequential SOFC stacks, the fuel flow path 102 includes a fuel inlet, an air inlet, and a fuel reformer, and the air flow path 104 includes an air inlet. For example, the fuel inlet 116, the air inlet 124, and the fuel reformer 130 are again shown as being positioned between the first SOFC stack 110 and the second SOFC stack 112, and the initial fuel reformer 138 is again shown as being positioned before the initial SOFC stack 120.

Additionally, the fuel flow path 102 between the initial SOFC stack 120 and the first SOFC stack 110 includes (i) a fuel inlet 148 positioned for injecting fuel 150 into the fuel flow path 102 and (ii) a fuel reformer 152. Further, the air flow path 104 between the initial SOFC stack 120 and the first SOFC stack 110 includes an air inlet 154 positioned for injecting air 156 into the air flow path 104.

The fuel inlet 148, the fuel reformer 152, and the air inlet 154 can take similar forms as, and function similarly to, the fuel inlet 116, the fuel reformer 130, and the air inlet 124 described above, respectively. Further, the fuel 150 and the air 156 can take the same form as the fuel 118 and the air 126 described above, respectively.

In operation, the fuel 150 injected by the fuel inlet 148 subsequently mixes with fuel exhaust 158 leaving the initial SOFC stack 120 to create a fuel mixture 160 made up of the fuel 150 and the fuel exhaust 158. The fuel reformer 152 then reforms the fuel mixture 160 and the fuel mixture 160, now reformed, enters the first SOFC stack 110 to be used in the electrochemical reaction that takes place in the first SOFC stack 110. To provide the fuel reformer 152 with heat required for its reformation reaction, heat 162 is extracted from air exhaust 164 leaving the initial SOFC stack 120 and transferred between the air flow path 104 and the fuel flow path 102. Further, the air 156 injected by the air inlet 154 subsequently mixes with the air exhaust 164 to create an air mixture 166 made up of the air 156 and the air exhaust 164. The air mixture 166 then enters the first SOFC stack 110 to be used in the electrochemical reaction that takes place in the first SOFC stack 110. The fuel mixture 160 and the air mixture 166 can be similar to the fuel mixture 122 and the air mixture 128 described above, respectively.

Adding fuel and air between SOFC stacks of each pair of SOFC stacks can help provide more reactants, as well as help regulate temperature, for the electrochemical reactions that take place, thereby increasing the overall efficiency of the system 100. Furthermore, weight and volume of the system 100 can be reduced and minimized in the same manners as discussed above.

Although no fuel mixers or air mixers are shown in Figure 7, a fuel mixer and/or an air mixer could be positioned between any two sequential SOFC stacks of the series of SOFC stacks 101 and can provide the same or similar advantages as the fuel mixer 134 and the air mixer 136 described above.

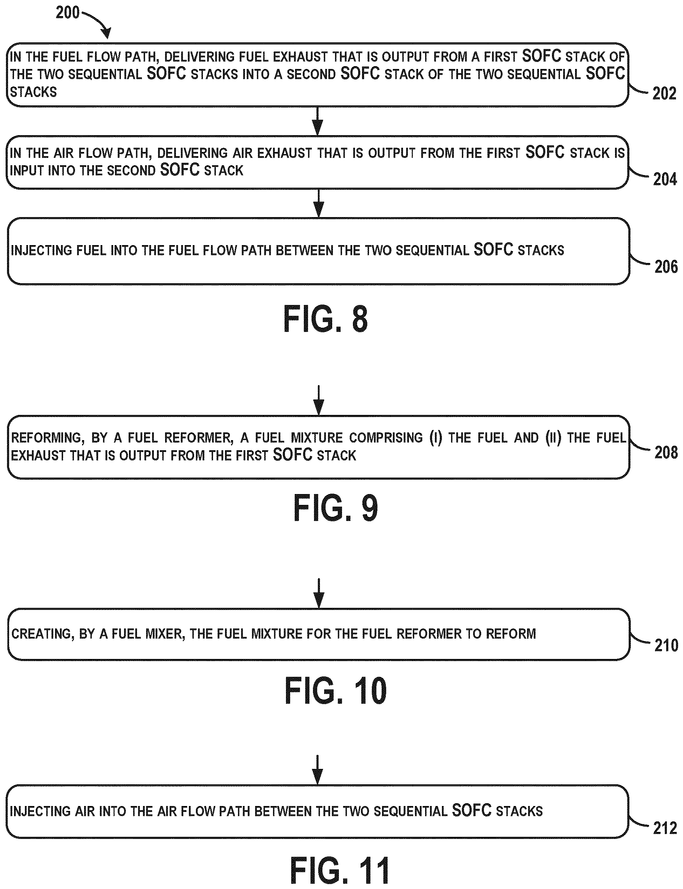

Figure 8 shows a flowchart of an example of a method 200 for operating a series of SOFC stacks, where the series of SOFC stacks includes a fuel flow path through the series of SOFC stacks and an air flow path through the series of SOFC stacks, according to an example implementation. Method 200 shown in Figure 8 presents an example of a method that could be used with the system 100 described herein. Method 200 may include one or more operations, functions, or actions as illustrated by one or more of blocks 202-206.

Each block in Figure 8, as well as each block in Figures 9, 10, 11, and 12, represents operations, functions, or actions that occur between two sequential SOFC stacks in a series of SOFC stacks.

At block 202, the method 200 includes, in the fuel flow path, delivering fuel exhaust that is output from a first SOFC stack of the two sequential SOFC stacks into a second SOFC stack of the two sequential SOFC stacks.

At block 204, the method 200 includes, in the air flow path, delivering air exhaust that is output from the first SOFC stack is input into the second SOFC stack.

At block 206, the method 200 includes injecting fuel into the fuel flow path between the two sequential SOFC stacks.

Figure 9 shows a flowchart of another example method for use with the method 200. At block 208 of Figure 9, functions include reforming, by a fuel reformer, a fuel mixture comprising (i) the fuel and (ii) the fuel exhaust that is output from the first SOFC stack.

Figure 10 shows a flowchart of another example method for use with the method 200. At block 210 of Figure 10, functions include creating, by a fuel mixer, the fuel mixture for the fuel reformer to reform.

Figure 11 shows a flowchart of another example method for use with the method 200. At block 212 of Figure 11, functions include injecting air into the air flow path between the two sequential SOFC stacks.

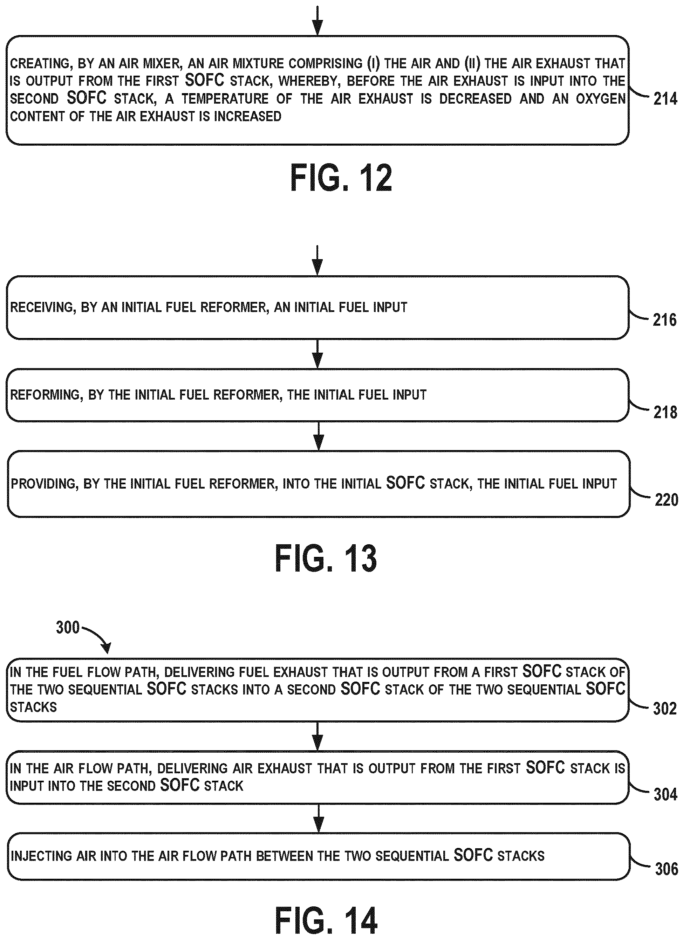

Figure 12 shows a flowchart of an example method for use with the method 200 particularly with the method of Figure 11 where the air is injected into the air flow path between the two sequential SOFC stacks. At block 214, functions include creating, by an air mixer, an air mixture comprising (i) the air and (ii) the air exhaust that is output from the first SOFC stack, whereby, before the air exhaust is input into the second SOFC stack, a temperature of the air exhaust is decreased and an oxygen content of the air exhaust is increased.

Figure 13 shows a flowchart of another example method for use with the method 200. As discussed above, the series of SOFC stacks includes an initial SOFC stack arranged sequentially first in the series of SOFC stacks, and the functions at blocks 216-220 relate to the initial SOFC stack. In particular, at block 216, functions include receiving, by an initial fuel reformer, an initial fuel input. At block 218, functions include reforming, by the initial fuel reformer, the initial fuel input to produce a reformed fuel stream having a predetermined temperature. And at block 220, functions include providing, by the initial fuel reformer, into the initial SOFC stack, the reformed fuel stream having the predetermined temperature. As discussed above, the initial fuel reformer can either be a CPOX reformer or a steam reformer.

Figure 14 shows a flowchart of another example of a method 300 for operating a series of SOFC stacks, where the series of SOFC stacks includes a fuel flow path through the series of SOFC stacks and an air flow path through the series of SOFC stacks, according to an example implementation. Method 300 shown in Figure 14 presents an example of a method that could be used with the system 100 described herein. Method 300 may include one or more operations, functions, or actions as illustrated by one or more of blocks 302-306.

Each block in Figure 14 represents operations, functions, or actions that occur between two sequential SOFC stacks in a series of SOFC stacks.

At block 302, the method 300 includes, in the fuel flow path, delivering fuel exhaust that is output from a first SOFC stack of the two sequential SOFC stacks into a second SOFC stack of the two sequential SOFC stacks.

At block 304, the method 300 includes, in the air flow path, delivering air exhaust that is output from the first SOFC stack is input into the second SOFC stack.

At block 306, the method 300 includes injecting air into the air flow path between the two sequential SOFC stacks.

Devices or systems may be used or configured to perform logical functions presented in Figures 8, 9, 10, 11, 12, 13, and 14. In some instances, components of the devices and/or systems may be configured to perform the functions such that the components are actually configured and structured (with hardware and/or software) to enable such performance. In other examples, components of the devices and/or systems may be arranged to be adapted to, capable of, or suited for performing the functions, such as when operated in a specific manner. Although blocks in Figures 8, 9, 10, 11, 12, 13, and 14, are illustrated in a sequential order, these blocks may also be performed in parallel, and/or in a different order than those described herein. Also, the various blocks may be combined into fewer blocks, divided into additional blocks, and/or removed based upon the desired implementation.

It should be understood that for these and other processes and methods disclosed herein, flowcharts show functionality and operation of one possible implementation of present examples. In this regard, each block or portions of each block may represent a module, a segment, or a portion of program code, which includes one or more instructions executable by a processor for implementing specific logical functions or steps in the process. The program code may be stored on any type of computer readable medium or data storage, for example, such as a storage device including a disk or hard drive. Further, the program code can be encoded on a computer-readable storage media in a machine-readable format, or on other non-transitory media or articles of manufacture. The computer readable medium may include non-transitory computer readable medium or memory, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a tangible computer readable storage medium, for example.

In addition, each block or portions of each block in Figures 8, 9, 10, 11, 12, 13, and 14, may represent circuitry that is wired to perform the specific logical functions in the process. Alternative implementations are included within the scope of the examples of the present disclosure in which functions may be executed out of order from that shown or discussed, including substantially concurrent or in reverse order, depending on the functionality involved, as would be understood by those reasonably skilled in the art.

Different examples of the system(s), device(s), and method(s) disclosed herein include a variety of components, features, and functionalities. It should be understood that the various examples of the system(s), device(s), and method(s) disclosed herein may include any of the components, features, and functionalities of any of the other examples of the system(s), device(s), and method(s) disclosed herein in any combination or any sub-combination, and all of such possibilities are intended to be within the scope of the disclosure.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples may describe different advantages as compared to other advantageous examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A system (100) for increasing solid oxide fuel cell (SOFC) efficiency, the system (100) comprising:
a series of SOFC stacks (101);
a fuel flow path (102) through the series of SOFC stacks (101); and
an air flow path (104) through the series of SOFC stacks (101),
wherein, between two sequential SOFC stacks (106) in the series of SOFC stacks (101):
in the fuel flow path (102), fuel exhaust (108) that is output from a first SOFC stack (110) of the two sequential SOFC stacks (106) is input into a second SOFC stack (112) of the two sequential SOFC stacks (106),
in the air flow path (104), air exhaust (114) that is output from the first SOFC stack (110) is input into the second SOFC stack (112), and
the fuel flow path (102) comprises a fuel inlet (116) positioned for injecting fuel (118) into the fuel flow path (102) between the two sequential SOFC stacks (106).

2. The system (100) of claim 1, wherein, between the two sequential SOFC stacks (106), the fuel flow path (102) further comprises a fuel reformer (130) that is configured for reforming a fuel mixture (122) comprising (i) the fuel (118) injected by the fuel inlet (116) and (ii) the fuel exhaust (108) that is output from the first SOFC stack (110).

3. The system (100) of any of claims 1 to 2, wherein the fuel reformer (130) includes a steam reformer.

4. The system (100) of any of claims 1 to 3, wherein the fuel flow path (102) and the air flow path (104) are distinct paths such that, between the two sequential SOFC stacks (106), fuel from the fuel flow path (102) and air from the air flow path (104) do not mix, and
wherein the air flow path (104) is adjacent to the fuel reformer (130) such that the air flow path (104) and the fuel reformer (130) are separated by, but share, a solid wall through which heat (132) may transfer.

5. The system (100) of any of claims 1 to 4, wherein, between the two sequential SOFC stacks (106), the fuel flow path (102) further comprises a fuel mixer (134) configured to mix the fuel mixture (122) for the fuel reformer (130) to reform.

6. The system (100) of any of claims 1 to 5, wherein, between the two sequential SOFC stacks (106), the air flow path (104) comprises an air inlet (124) positioned for injecting air (126) into the air flow path (104) between the two sequential SOFC stacks (106).

7. The system (100) of any of claims 1 to 6, wherein, between the two sequential SOFC stacks (106), the air flow path (104) further comprises an air mixer (136) configured to mix an air mixture (128) comprising (i) the air (126) injected by the air inlet (124) and (ii) the air exhaust (114) that is output from the first SOFC stack (110).

8. The system (100) of any of claims 1 to 7, wherein, between the two sequential SOFC stacks (106), the fuel flow path (102) further comprises a fuel reformer (130) that is configured for reforming a fuel mixture (122) comprising (i) the fuel (118) injected by the fuel inlet (116) and (ii) the fuel exhaust (108) that is output from the first SOFC stack (110).

9. The system (100) of any of claims 1 to 8, wherein the series of SOFC stacks (101) comprises an initial SOFC stack (120) arranged sequentially first in the series of SOFC stacks (101), and the system (100) further comprising, as part of the fuel flow path (102):
an initial fuel reformer (138) configured for receiving an initial fuel input (140), reforming the initial fuel input (140), and then providing, into the initial SOFC stack (120), the initial fuel input (140).

10. The system (100) of any of claim 9, wherein the initial fuel reformer (138) includes a catalytic partial oxidation (CPOX) reformer or a steam reformer.

11. A method (200) for operating a series of solid oxide fuel cell (SOFC) stacks, wherein the series of SOFC stacks (101) includes a fuel flow path (102) through the series of SOFC stacks (101) and an air flow path (104) through the series of SOFC stacks (101), the method comprising:
between two sequential SOFC stacks (106) in the series of SOFC stacks (101):
(202) in the fuel flow path (102), delivering fuel exhaust (108) that is output from a first SOFC stack (110) of the two sequential SOFC stacks (106) into a second SOFC stack (112) of the two sequential SOFC stacks (106),
(204) in the air flow path (104), delivering air exhaust (114) that is output from the first SOFC stack (110) is input into the second SOFC stack (112), and
(206) injecting fuel (118) into the fuel flow path (102) between the two sequential SOFC stacks (106).

12. The method (200) of claim 11, further comprising:
(208) between the two sequential SOFC stacks (106), reforming, by a fuel reformer (130), a fuel mixture (122) comprising (i) the fuel (118) and (ii) the fuel exhaust (108) that is output from the first SOFC stack (110).

13. The method (200) of any of claims 11 to 12, further comprising:
(210) between the two sequential SOFC stacks (106), creating, by a fuel mixer (134), the fuel mixture (122) for the fuel reformer (130) to reform, and
injecting air (126) into the air flow path (104) between the two sequential SOFC stacks (106).

14. The method (200) of any of claims 11 to 13, further comprising:
(214) between the two sequential SOFC stacks (106), creating, by an air mixer (136), an air mixture (128) comprising (i) the air (126) and (ii) the air exhaust (114) that is output from the first SOFC stack (110), whereby, before the air exhaust (114) is input into the second SOFC stack (112), a temperature of the air exhaust (114) is decreased and an oxygen content of the air exhaust (114) is increased.

15. The method (200) of any of claims 11 to 14, wherein the series of SOFC stacks (101) comprises an initial SOFC stack (120) arranged sequentially first in the series of SOFC stacks (101), the method further comprising:
(216) receiving, by an initial fuel reformer (138), an initial fuel input (140);
(218) reforming, by the initial fuel reformer (138), the initial fuel input (140); and
(220) providing, by the initial fuel reformer (138), into the initial SOFC stack (120), the initial fuel input (140),
wherein the initial fuel reformer (138) includes a catalytic partial oxidation (CPOX) reformer or a steam reformer.

## Patentansprüche

1. System (100) zur Erhöhung des Wirkungsgrads einer Festoxidbrennstoffzelle (SOFC, Solid Oxide Fuel Cell), wobei das System (100) Folgendes umfasst:
eine Reihe von Festoxidbrennstoffzellenstapeln (101);
einen Brennstoffströmungspfad (102) durch die Reihe von Festoxidbrennstoffzellenstapeln (101); und
einen Luftströmungspfad (104) durch die Reihe von Festoxidbrennstoffzellenstapeln (101),
wobei zwischen zwei aufeinanderfolgenden Festoxidbrennstoffzellenstapeln (106) in der Reihe von Festoxidbrennstoffzellenstapeln (101):
in dem Brennstoffströmungspfad (102) Brennstoffabgas (108), das von einem ersten Festoxidbrennstoffzellenstapel (110) der beiden aufeinanderfolgenden Festoxidbrennstoffzellenstapel (106) ausgegeben wird, in einen zweiten Festoxidbrennstoffzellenstapel (112) der beiden aufeinanderfolgenden Festoxidbrennstoffzellenstapel (106) zugeführt wird,
in dem Luftströmungspfad (104) die von dem ersten Festoxidbrennstoffzellenstapel (110) ausgegebene Abluft (114) in den zweiten Festoxidbrennstoffzellenstapel (112) zugeführt wird, und
der Brennstoffströmungspfad (102) einen Brennstoffeinlass (116) umfasst, der zum Einspritzen von Brennstoff (118) in den Brennstoffströmungspfad (102) zwischen den beiden aufeinanderfolgenden Festoxidbrennstoffzellenstapeln (106) positioniert ist.

2. System (100) nach Anspruch 1, wobei zwischen den zwei aufeinanderfolgenden Festoxidbrennstoffzellenstapeln (106) der Brennstoffströmungspfad (102) ferner einen Brennstoffreformer (130) umfasst, der zum Reformieren eines Brennstoffgemisches (122) ausgelegt ist, das (i) den durch den Brennstoffeinlass (116) eingespritzten Brennstoff (118) und (ii) das von dem ersten Festoxidbrennstoffzellenstapel (110) ausgegebene Brennstoffabgas (108) umfasst.

3. System (100) nach einem der Ansprüche 1 und 2, wobei der Brennstoffreformer (130) einen Dampfreformer umfasst.

4. System (100) nach einem der Ansprüche 1 bis 3, wobei der Brennstoffströmungspfad (102) und der Luftströmungspfad (104) unterschiedliche Pfade sind, so dass sich zwischen den beiden aufeinanderfolgenden Festoxidbrennstoffzellenstapeln (106) Brennstoff aus dem Brennstoffströmungspfad (102) und Luft aus dem Luftströmungspfad (104) nicht miteinander vermischen, und
wobei der Luftströmungspfad (104) an den Brennstoffreformer (130) angrenzt, so dass der Luftströmungspfad (104) und der Brennstoffreformer (130) sich eine gemeinsame feste Wand teilen, durch die sie voneinander getrennt sind aber durch die Wärme (132) dringen kann.

5. System (100) nach einem der Ansprüche 1 bis 4, wobei der Brennstoffströmungspfad (102) zwischen den beiden aufeinanderfolgenden Festoxidbrennstoffzellenstapeln (106) ferner einen Brennstoffmischer (134) umfasst, der so ausgelegt ist, dass er das Brennstoffgemisch (122) zum Reformieren durch den Brennstoffreformer (130) mischt.

6. System (100) nach einem der Ansprüche 1 bis 5, wobei der Luftströmungspfad (104) zwischen den beiden aufeinanderfolgenden Festoxidbrennstoffzellenstapeln (106) einen Lufteinlass (124) umfasst, der zum Einspritzen von Luft (126) in den Luftströmungspfad (104) zwischen den beiden aufeinanderfolgenden Festoxidbrennstoffzellenstapeln (106) positioniert ist.

7. System (100) nach einem der Ansprüche 1 bis 6, wobei der Luftströmungspfad (104) zwischen den beiden aufeinanderfolgenden Festoxidbrennstoffzellenstapeln (106) ferner einen Luftmischer (136) umfasst, der zum Mischen einer Luftmischung (128) ausgelegt ist, die (i) die durch den Lufteinlass (124) eingespritzte Luft (126) und (ii) die von dem ersten Festoxidbrennstoffzellenstapel (110) ausgegebene Abluft (114) umfasst.

8. System (100) nach einem der Ansprüche 1 bis 7, wobei zwischen den zwei aufeinanderfolgenden Festoxidbrennstoffzellenstapeln (106) der Brennstoffströmungspfad (102) ferner einen Brennstoffreformer (130) umfasst, der zum Reformieren eines Brennstoffgemisches (122) ausgelegt ist, das (i) den durch den Brennstoffeinlass (116) eingespritzten Brennstoff (118) und (ii) den von dem ersten Festoxidbrennstoffzellenstapel (110) ausgegebenen Brennstoffauslass (108) enthält.

9. System (100) nach einem der Ansprüche 1 bis 8, wobei die Reihe von Festoxidbrennstoffzellenstapeln (101) einen anfänglichen Festoxidbrennstoffzellenstapel (120) umfasst, der in der Reihe von Festoxidbrennstoffzellenstapeln (101) aufeinanderfolgend zuerst angeordnet ist, und wobei das System (100) als Teil des Brennstoffströmungspfads (102) ferner Folgendes umfasst:
einen anfänglichen Brennstoffreformer (138), der so ausgelegt ist, dass er eine anfängliche Brennstoffzufuhr (140) empfängt, die anfängliche Brennstoffzufuhr (140) reformiert und dann die anfängliche Brennstoffzufuhr (140) in den anfänglichen Festoxidbrennstoffzellenstapel (120) einspeist.

10. System (100) nach Anspruch 9, wobei der anfängliche Brennstoffreformer (138) einen katalytischen Partialoxidationsreformer (CPOX) oder einen Dampfreformer umfasst.

11. Verfahren (200) zum Betreiben einer Reihe von Festoxidbrennstoffzellenstapeln, wobei die Reihe von Festoxidbrennstoffzellenstapeln (101) einen Brennstoffströmungspfad (102) durch die Reihe von Festoxidbrennstoffzellenstapeln (101) und einen Luftströmungspfad (104) durch die Reihe von Festoxidbrennstoffzellenstapeln (101) umfasst, wobei das Verfahren Folgendes umfasst:
zwischen zwei aufeinanderfolgenden Festoxidbrennstoffzellenstapeln (106) in der Reihe von Festoxidbrennstoffzellenstapeln (101):
(202) in dem Brennstoffströmungspfad (102), Zuleiten von Brennstoffabgas (108), das von einem ersten Festoxidbrennstoffzellenstapel (110) der beiden aufeinanderfolgenden Festoxidbrennstoffzellenstapel (106) ausgegeben wird, in einen zweiten Festoxidbrennstoffzellenstapel (112) der beiden aufeinanderfolgenden Festoxidbrennstoffzellenstapel (106),
(204) in dem Luftströmungspfad (104), Zuleiten der von dem ersten Festoxidbrennstoffzellenstapel (110) ausgegebenen Abluft (114) in den zweiten Festoxidbrennstoffzellenstapel (112), und
(206) Einspritzen von Brennstoff (118) in den Brennstoffströmungspfad (102) zwischen den beiden aufeinanderfolgenden Festoxidbrennstoffzellenstapeln (106).

12. Verfahren (200) nach Anspruch 11, das weiterhin Folgendes umfasst:
(208) zwischen den beiden aufeinanderfolgenden Festoxidbrennstoffzellenstapeln (106), durch einen Brennstoffreformer (130), Reformieren eines Brennstoffgemisches (122), das (i) den Brennstoff (118) und (ii) das Brennstoffabgas (108) umfasst, das von dem ersten Festoxidbrennstoffzellenstapel (110) ausgegeben wird.

13. Verfahren (200) nach einem der Ansprüche 11 und 12, das ferner Folgendes umfasst:
(210) zwischen den beiden aufeinanderfolgenden Festoxidbrennstoffzellenstapeln (106), durch einen Brennstoffmischer (134), Erzeugen des Brennstoffgemisches (122) zum Reformieren durch den Brennstoffreformer (130), und
Einspritzen von Luft (126) in den Luftströmungspfad (104) zwischen den beiden aufeinanderfolgenden Festoxidbrennstoffzellenstapeln (106).

14. Verfahren (200) nach einem der Ansprüche 11 bis 13, das ferner Folgendes umfasst:
(214) zwischen den beiden aufeinanderfolgenden Festoxidbrennstoffzellenstapeln (106), durch einen Luftmischer (136), Erzeugen eines Luftgemisches (128), das (i) die Luft (126) und (ii) die Abluft (114) umfasst, die von dem ersten Festoxidbrennstoffzellenstapel (110) ausgegeben wird, wodurch, bevor die Abluft (114) in den zweiten Festoxidbrennstoffzellenstapel (112) zugeführt wird, eine Temperatur der Abluft (114) verringert und ein Sauerstoffgehalt der Abluft (114) erhöht wird.

15. Verfahren (200) nach einem der Ansprüche 11 bis 14, wobei die Reihe von Festoxidbrennstoffzellenstapeln (101) einen anfänglichen Festoxidbrennstoffzellenstapel (120) umfasst, der in der Reihe von Festoxidbrennstoffzellenstapeln (101) aufeinanderfolgend zuerst angeordnet ist, und wobei das Verfahren ferner Folgendes umfasst:
(216) Empfangen einer anfänglichen Brennstoffzufuhr (140) durch einen anfänglichen Brennstoffreformer (138);
(218) Reformieren der anfänglichen Brennstoffzufuhr (140) durch den anfänglichen Brennstoffreformer (138); und
(220) Einspeisen der anfänglichen Brennstoffzufuhr (140) durch den anfänglichen Brennstoffreformer (138) in den anfänglichen Festoxidbrennstoffzellenstapel (120),
wobei der anfängliche Brennstoffreformer (138) einen katalytischen Partialoxidationsreformer (CPOX) oder einen Dampfreformer umfasst.

## Revendications

1. Système (100) permettant d'accroître le rendement de cellules de piles à combustible à oxydes solides (SOFC, solid oxide fuel cell), le système (100) comprenant :
une série de piles à combustible à oxydes solides (101),
une voie de circulation de combustible (102) traversant la série de piles à combustible à oxydes solides (101), et
une voie de circulation d'air (104) traversant la série de piles à combustible à oxydes solides (101) ;
dans lequel système, entre deux piles à combustible à oxydes solides (106) successives au sein de la série de piles à combustible à oxydes solides (101) :
dans la voie de circulation de combustible (102), un effluent de combustible (108) issu d'une première pile à combustible à oxydes solides (110) des deux piles à combustible à oxydes solides (106) successives est introduit dans une deuxième pile à combustible à oxydes solides (112) des deux piles à combustible à oxydes solides (106) successives,
dans la voie de circulation d'air (104), un effluent d'air (114) issu de la première pile à combustible à oxydes solides (110) est introduit dans la deuxième pile à combustible à oxydes solides (112), et
la voie de circulation de combustible (102) comprend une entrée de combustible (116) disposée pour injecter du combustible (118) dans la voie de circulation de combustible (102) entre les deux piles à combustible à oxydes solides (106) successives.

2. Système (100) selon la revendication 1, dans lequel, entre les deux piles à combustible à oxydes solides (106) successives, la voie de circulation de combustible (102) comprend en outre un reformeur de combustible (130) qui est conçu pour reformer un mélange combustible (122) comprenant (i) le combustible (118) injecté par l'entrée de combustible (116) et (ii) l'effluent de combustible (108) issu de la première pile à combustible à oxydes solides (110).

3. Système (100) selon l'une quelconque des revendications 1 et 2, dans lequel le reformeur de combustible (130) comprend un reformeur de vapeur.

4. Système (100) selon l'une quelconque des revendications 1 à 3, dans lequel la voie de circulation de combustible (102) et la voie de circulation d'air (104) sont des voies distinctes telles que, entre les deux piles à combustible à oxydes solides (106) successives, du combustible issu de la voie de circulation de combustible (102) et de l'air issu de la voie de circulation d'air (104) ne se mélangent pas, et
dans lequel la voie de circulation d'air (104) est adjacente au reformeur de combustible (130) de telle manière que la voie de circulation d'air (104) et le reformeur de combustible (130) sont séparés par une paroi solide qu'elles ont en commun et par laquelle de la chaleur (132) peut être transmise.

5. Système (100) selon l'une quelconque des revendications 1 à 4, dans lequel, entre les deux piles à combustible à oxydes solides (106) successives, la voie de circulation de combustible (102) comprend en outre un mélangeur de combustible (134) conçu pour mélanger le mélange combustible (122) destiné à être reformé par le reformeur de combustible (130).

6. Système (100) selon l'une quelconque des revendications 1 à 5, dans lequel, entre les deux piles à combustible à oxydes solides (106) successives, la voie de circulation d'air (104) comprend une entrée d'air (124) disposée pour injecter de l'air (126) dans la voie de circulation d'air (104) entre les deux piles à combustible à oxydes solides (106) successives.

7. Système (100) selon l'une quelconque des revendications 1 à 6, dans lequel, entre les deux piles à combustible à oxydes solides (106) successives, la voie de circulation d'air (104) comprend en outre un mélangeur d'air (136) conçu pour mélanger un mélange d'air (128) comprenant (i) l'air (126) injecté par l'entrée d'air (124) et (ii) l'effluent d'air (114) issu de la première pile à combustible à oxydes solides (110).

8. Système (100) selon l'une quelconque des revendications 1 à 7, dans lequel, entre les deux piles à combustible à oxydes solides (106) successives, la voie de circulation de combustible (102) comprend en outre un reformeur de combustible (130) qui est conçu pour reformer un mélange combustible (122) comprenant (i) le combustible (118) injecté par l'entrée de combustible (116) et (ii) l'effluent de combustible (108) issu de la première pile à combustible à oxydes solides (110).

9. Système (100) selon l'une quelconque des revendications 1 à 8, dans lequel la série de piles à combustible à oxydes solides (101) comprend une pile à combustible à oxydes solides (120) initiale agencée la première dans la série de piles à combustible à oxydes solides (101), le système (100) comprenant en outre, pour constituer la voie de circulation de combustible (102) :
un reformeur de combustible initial (138) conçu pour recevoir une introduction de combustible initiale (140), reformer l'introduction de combustible initiale (140), puis fournir, dans la pile à combustible à oxydes solides (120) initiale, l'introduction de combustible initiale (140).

10. Système (100) selon la revendication 9, dans lequel le reformeur de combustible initial (138) comprend un reformeur à oxydation partielle catalytique (CPOX, catalytic partial oxidation) ou un reformeur de vapeur.

11. Procédé (200) d'exploitation d'une série de piles à combustible à oxydes solides, dans lequel la série de piles à combustible à oxydes solides (101) comporte une voie de circulation de combustible (102) traversant la série de piles à combustible à oxydes solides (101) et une voie de circulation d'air (104) traversant la série de piles à combustible à oxydes solides (101), le procédé comprenant les opérations suivantes :
entre deux piles à combustible à oxydes solides (106) successives au sein de la série de piles à combustible à oxydes solides (101) :
(202) dans la voie de circulation de combustible (102), apporter un effluent de combustible (108) issu d'une première pile à combustible à oxydes solides (110) des deux piles à combustible à oxydes solides (106) successives dans une deuxième pile à combustible à oxydes solides (112) des deux piles à combustible à oxydes solides (106) successives,
(204) dans la voie de circulation d'air (104), apporter un effluent d'air (114) issu de la première pile à combustible à oxydes solides (110) dans la deuxième pile à combustible à oxydes solides (112), et
(206) injecter du combustible (118) dans la voie de circulation de combustible (102) entre les deux piles à combustible à oxydes solides (106) successives.

12. Procédé (200) selon la revendication 11, comprenant en outre l'opération suivante :
(208) entre les deux piles à combustible à oxydes solides (106) successives, reformer, par un reformeur de combustible (130), un mélange combustible (122) comprenant (i) le combustible (118) et (ii) l'effluent de combustible (108) issu de la première pile à combustible à oxydes solides (110).

13. Procédé (200) selon l'une quelconque des revendications 11 et 12, comprenant en outre les opérations consistant à :
(210) entre les deux piles à combustible à oxydes solides (106) successives, créer, par un mélangeur de combustible (134), le mélange combustible (122) destiné à être reformé par le reformeur de combustible (130), et
injecter de l'air (126) dans la voie de circulation d'air (104) entre les deux piles à combustible à oxydes solides (106) successives.

14. Procédé (200) selon l'une quelconque des revendications 11 à 13, comprenant en outre l'opération consistant à :
(214) entre les deux piles à combustible à oxydes solides (106) successives, créer, par un mélangeur d'air (136), un mélange d'air (128) comprenant (i) l'air (126) et (ii) l'effluent d'air (114) issu de la première pile à combustible à oxydes solides (110), moyennant quoi, avant que l'effluent d'air (114) ne soit introduit dans la deuxième pile à combustible à oxydes solides (112), la température de l'effluent d'air (114) est abaissée et la teneur en oxygène de l'effluent d'air (114) est augmentée.

15. Procédé (200) selon l'une quelconque des revendications 11 à 14, dans lequel la série de piles à combustible à oxydes solides (101) comprend une pile à combustible à oxydes solides (120) initiale agencée la première dans la série de piles à combustible à oxydes solides (101), le procédé comprenant en outre les opérations consistant à :
(216) recevoir, par un reformeur de combustible initial (138), une introduction de combustible initiale (140) ;
(218) reformer, par le reformeur de combustible initial (138), l'introduction de combustible initiale (140) ; et
(220) fournir, par le reformeur de combustible initial (138), dans la pile à combustible à oxydes solides (120) initiale, l'introduction de combustible initiale (140),
ledit reformeur de combustible initial (138) comportant un reformeur à oxydation partielle catalytique (CPOX, catalytic partial oxidation) ou un reformeur de vapeur.
